# FASCICULE DE BREVET EUROPEEN

(11) **EP 2 303 615 B1**
(45) Date de publication et mention de la délivrance du brevet: **28.12.2011**
(21) Numéro de dépôt: 09765765.4
(22) Date de dépôt: 08.06.2009
(51) Int. Cl.: B60H 1/00, H01H 25/06

(54) **DISPOSITIF DE COMMANDE POUR LA COMMANDE DE FONCTIONS D'UN TABLEAU DE COMMANDE POUR VÉHICULE AUTOMOBILE ET TABLEAU DE COMMANDE CORRESPONDANT**
STEUERVORRICHTUNG ZUR STEUERUNG VON FUNKTIONEN AUF EINER KRAFTFAHRZEUGSCHALTTAFEL UND ENTSPRECHENDE SCHALTTAFEL
CONTROL DEVICE FOR CONTROLLING FUNCTIONS ON A MOTOR VEHICLE CONTROL PANEL AND CORRESPONDING CONTROL PANEL

(30) Priorité: 20.06.2008 FR 0803443
(43) Date de publication de la demande: 06.04.2011
(73) Titulaire: Valeo Systèmes Thermiques, 78320 La Verriere (FR)
(72) Inventeur: LEKMINE, Djamel, F-91470 Angervilliers (FR); LUCAORA, Laurent, F-92170 Vanves (FR)
(74) Mandataire: Benoit, Monique
(86) Numéro de dépôt international: PCT/EP2009/057020
(87) Numéro de publication internationale: WO 2009/153185

(56) Documents cités:
- EP-A- 1 518 727
- EP-A- 1 742 240
- EP-B- 1 708 217
- FR-A- 2 756 067
- JP-A- 2004 185 927
- JP-A- 2007 265 692
- KR-A- 20040 084 068

## Description

La présente invention concerne un dispositif de commande pour la commande de fonctions d'un tableau de commande pour véhicule automobile propre à être logé dans une planche de bord ou dans une façade rapportée de véhicule automobile. L'invention concerne également un tableau de commande pour véhicule automobile correspondant. L'invention s'applique plus particulièrement à un tableau de commande pour la commande de l'air conditionné d'un véhicule.

On connaît déjà d'après FR-A-2 720 339, un tableau de commande pour la commande d'un appareil du véhicule automobile, par exemple un appareil de chauffage et/ou de climatisation. En général, un tel tableau de commande comprend plusieurs dispositifs de commande pour régler respectivement la température de la ventilation, la distribution des flux d'air et l'intensité de la ventilation de l'air, dans l'habitacle du véhicule.

Les dispositifs de commande que comporte le tableau de commande peuvent être, par exemple, des organes de commande rotatifs, des organes de commande du type touche à enfoncement, à charnière ou à bascule.

Les dispositifs de commande doivent en outre comporter des moyens d'éclairage destinés à éclairer des zones choisies de la façade pour permettre au conducteur ou aux passagers du véhicule de repérer lesdits dispositifs et leurs positions respectives, en conduite de nuit.

Ainsi, les tableaux de commande doivent comporter, dans un espace réduit, un certain nombre de dispositifs assumant des fonctions spécifiques, en particulier de commande et d'éclairage.

Un dispositif de commande selon le préambule de la revendication 1 est connu du document EP 1742240 A.

Les dispositifs de commande connus ont notamment pour inconvénient de posséder une structure complexe qui nuit à leur fabrication en grande série sur des chaînes automatisées de montage.

Un autre inconvénient de ces dispositifs de commande connus est qu'ils conviennent, à chaque fois, à un panneau de commande d'un type de véhicule donné, ce qui nuit à la standardisation.

En effet, même si en théorie un même dispositif de commande pourrait être utilisé sur différents types de véhicules et pour différentes commandes, il existe des contraintes, notamment d'encombrement et d'intégration dans la planche de bord, qui font qu'un même dispositif de commande ne peut convenir qu'à un type de panneau de commande et de véhicule donné.

Un autre problème tient au fait que les dispositifs de commande d'un même tableau de commande conviennent pour un certain niveau d'équipement d'un véhicule donné, et ne peuvent pas être utilisés dans le même véhicule pour un autre niveau d'équipement.

Ainsi, par exemple, un tableau de commande convenant à un dispositif de chauffage dépourvu de climatisation, ne peut convenir à la commande d'un dispositif de chauffage analogue mais équipé de l'option climatisation.

L'invention a notamment pour but de surmonter les inconvénients précités en proposant un dispositif et un panneau de commande standardisés, de structure simple, pouvant être utilisés pour différents types de véhicules ou pour différents niveaux d'équipement d'un même type de véhicule.

L'invention propose à cet effet un dispositif de commande selon la revendication 1.

Selon une ou plusieurs caractéristiques préférentielles du dispositif de commande, prises seule ou en combinaison,
- ledit tambour de commande est réalisé en un matériau transmettant de la lumière et le socle comporte au moins un moyen d'éclairage, tel qu'une diode électroluminescente, pour le rétroéclairage d'une surface d'affichage du dispositif de commande et pour la génération d'une lumière diffuse circulaire autour de l'organe de commande,
- une surface d'affichage est portée par l'organe de commande et est rétroéclairée en fonction de la commande sélectionnée par la molette de commande et/ou par l'organe de commande,
- l'organe de commande comporte un commutateur électrique à enfoncement,
- l'organe de commande comporte commutateur électrique rotatif,
- la molette de commande comporte un adaptateur monté à rotation sur un arbre rotatif du socle, entre le socle et le tambour, configuré pour transmettre le mouvement de rotation du tambour à l'unité de base,
- l'adaptateur comporte un guide dérivé s'insérant dans une lumière du socle de manière à permettre le pivotement de l'adaptateur par un mouvement pivotant du guide dérivé dans la lumière,
- l'organe de commande comporte un support fixé au socle, monté de façon concentrique dans la molette de commande et présentant une surface d'affichage rétroéclairable,
- le tube axial présente une deuxième portion formée par un rétrécissement de la première portion, configurée soit pour être solidaire en rotation d'un arbre de l'unité de base, soit pour permettre le passage d'un arbre rotatif du socle,
- la molette de commande et l'organe de commande comportent des moyens de fixation amovibles coopérant avec des moyens de fixation amovibles correspondants du socle.

L'invention a aussi pour objet un tableau de commande pour véhicule automobile caractérisé en ce qu'il comporte au moins un dispositif de commande tel que décrit précédemment.

Le tableau de commande pour véhicule automobile est par exemple destiné à la commande de l'air conditionné et comporte deux premiers dispositifs de commande selon un premier mode de réalisation, pour la commande respective de la fonction de la température de la ventilation et de la distribution des flux d'air à l'intérieur de l'habitacle et au moins un deuxième dispositif de commande selon un deuxième mode de réalisation, pour la commande de l'intensité de la ventilation et du mode de recyclage de l'air.

D'autres avantages et caractéristiques apparaîtront à la lecture de la description de l'invention, ainsi que sur les figures annexées sur lesquelles :
- la figure 1a est une vue de côté d'un dispositif de commande selon un premier mode de réalisation à l'état assemblé,
- la figure 1b est une vue de dessus du dispositif de la figure 1a,
- la figure 1c est une vue en coupe AA du dispositif de la figure 1b,
- la figure 1d est une vue en perspective du dispositif de commande de la figure 1a à l'état désassemblé,
- les figures 2a, 2b, 2c et 2d sont des vues analogues d'un autre dispositif de commande selon le premier mode de réalisation,
- la figure 3a est une vue d'un dispositif de commande selon un deuxième mode de réalisation à l'état désassemblé,
- la figure 3b est une vue de dessus du dispositif de la figure 3a à l'état assemblé,
- la figure 3c est une en coupe AA de la figure 3b,
- la figure 3d est une vue de dessous du dispositif de la figure 3b et,
- la figure 4 est une vue en perspective d'un socle désassemblé du dispositif de commande de la figure 3a.

Sur ces figures, les éléments identiques portent les mêmes numéros de référence.

La présente invention concerne un dispositif de commande pour la commande de fonctions d'un tableau de commande pour véhicule automobile propre à être logé dans une planche de bord ou dans une façade rapportée de véhicule automobile. L'invention concerne également un tableau de commande pour véhicule automobile correspondant.

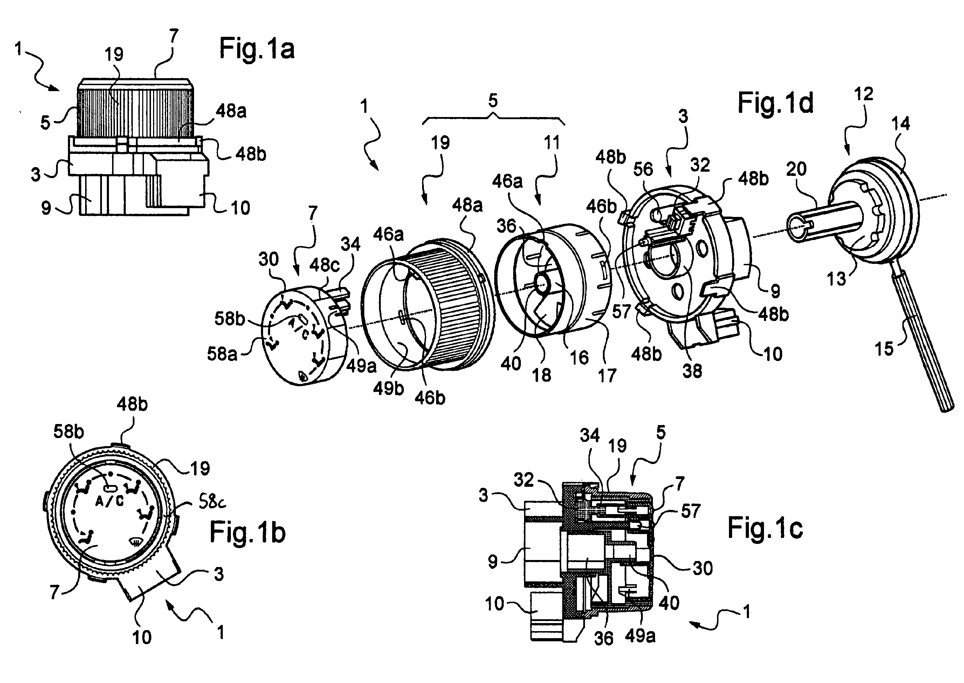

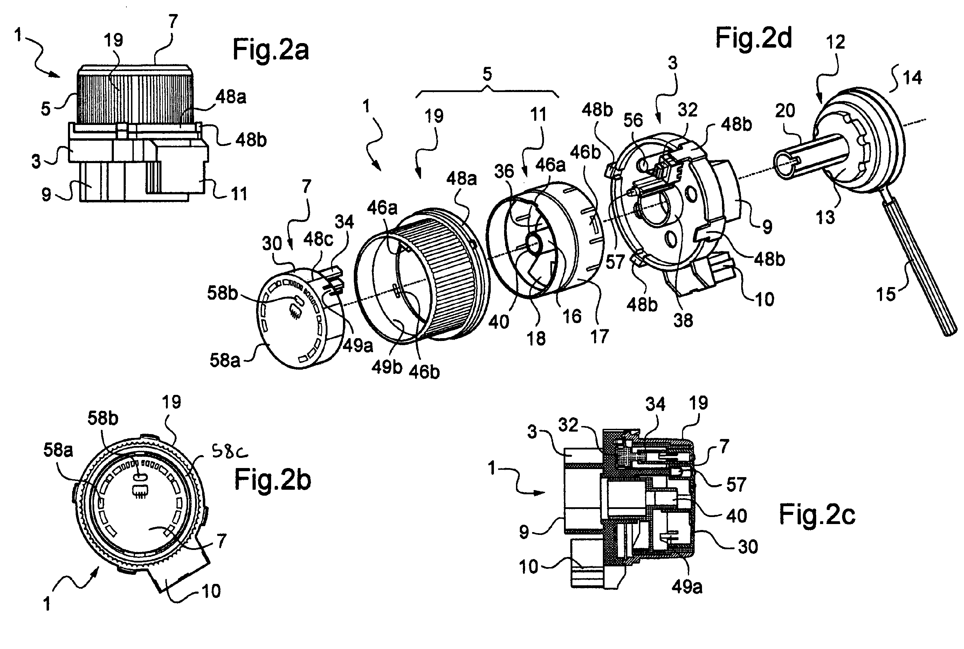

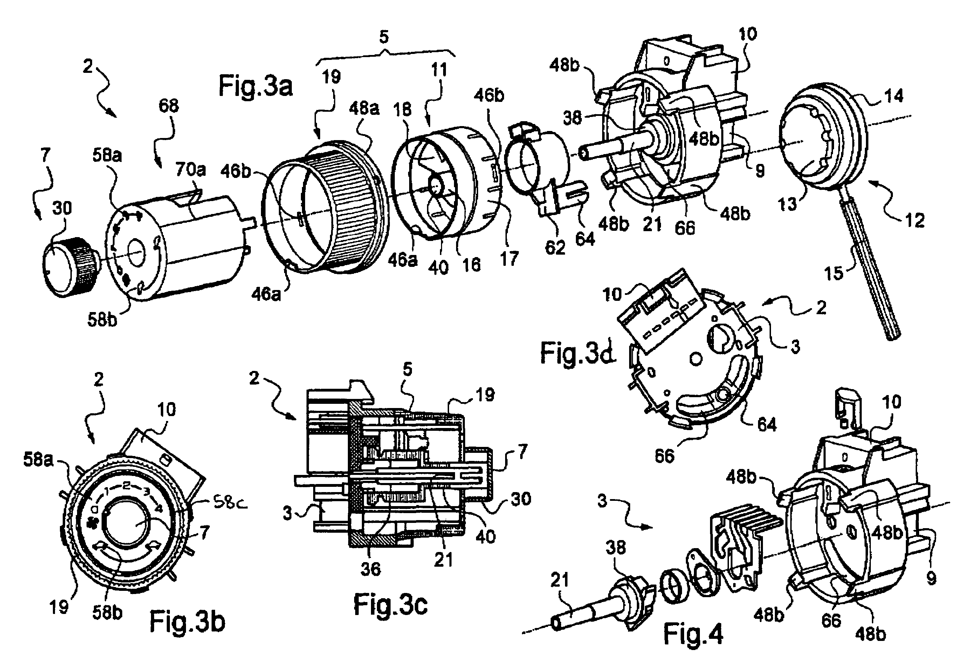

Le tableau comporte par exemple trois dispositifs de commande dont deux premiers dispositifs 1 sont configurés selon un premier mode de réalisation pour la commande respective de la distribution des flux d'air à l'intérieur de l'habitacle (figures 1a à 1d) et de la température de la ventilation (figures 2a à 2d) et un deuxième dispositif 2 est configuré selon un deuxième mode de réalisation pour la commande de l'intensité de la ventilation et du mode de circulation de l'air (figures 3a à 4).

Les figures 1a à 1d illustrent un dispositif de commande 1 réalisé selon un premier mode de réalisation.

Le dispositif de commande 1 comporte un socle 3, une molette de commande 5 montée en rotation sur le socle 3, par exemple par encliquetage, et un organe de commande 7 monté de façon concentrique dans la molette 5.

Le socle 3 est agencé pour pouvoir être mécaniquement fixé à un tableau de commande via des moyens de fixation 9. Le socle 3 comporte en outre un connecteur électrique 10 pour pouvoir être électriquement raccordé au tableau de commande.

La molette de commande 5 est configurée pour coopérer avec une unité de base 12 destinée à être connectée à un appareil du véhicule automobile (non représenté) par exemple pour être commandé par tirage de câble.

Selon une réalisation, l'unité de base 12 comporte un élément rotatif 13, une base 14 et un câble 15, par exemple un câble Bowden. Une extrémité gauche du câble 15 est fixée à la base 14 tandis qu'une extrémité droite est mobile avec l'élément rotatif 13 et s'enroule dans la base 14. L'autre extrémité (non visible) est destinée à être reliée à l'appareil à commander, par exemple à un volet d'un appareil de chauffage - climatisation.

Une telle unité de base 12 permet ainsi une commande mécanique souple capable de transmettre à distance le mouvement exercé sur l'élément rotatif 13.

La molette 5 comprend une bague de préhension 19 et un tambour de commande 11 présentant d'une part, une jupe périphérique 17 coopérant avec la bague 19 et d'autre part, un tube axial 16 relié à ladite jupe 17 par un pontet de liaison 18.

L'organe de commande 7 peut être de type électrique et/ou électronique et est configuré pour être relié à un circuit électrique, par exemple à un circuit imprimé, logé dans le tableau de commande.

L'organe de commande 7 du dispositif de commande 1 du premier mode de réalisation comporte un commutateur électrique à enfoncement.

Les commutateurs électriques à enfoncement sont des commutateurs ayant un axe de commande et dont l'enclenchement du commutateur est obtenu en poussant axialement l'axe de commande de la position de repos vers l'intérieur du commutateur jusqu'à la position d'enclenchement où il est mécaniquement retenu en place.

Lors du déclenchement du commutateur, l'axe est poussé axialement vers l'intérieur du commutateur au-delà de sa position d'enclenchement pour provoquer son dégagement et son retour automatique à sa position initiale de repos vers l'extérieur du commutateur, par exemple par un ressort de rappel.

Le commutateur électrique à enfoncement représenté sur les figures 1a à 1d, présente un axe relié à un bouton 30, coopérant avec un élément commutateur 32, fixé au socle 3.

L'axe présente par exemple des pattes d'encliquetage 34 prenant en tenaille l'élément commutateur 32 (voir plus particulièrement les figures 1a et 1c).

Par ailleurs, le tube axial 16 du tambour 11 présente une première portion 36 formant un moyen de guidage en rotation de la molette 5 en s'insérant dans une collerette 38 correspondante du socle 3.

En outre, une deuxième portion 40 du tube axial 16, formée par un rétrécissement de la première portion 36 est configurée pour être solidaire en rotation d'un arbre 20 de l'unité de base 12.

En outre, la deuxième portion 40 forme également un guide axial pour le bouton 30 de l'organe de commande 7.

Ainsi et comme visible sur la figure 1d, l'arbre 20 de l'unité de base 12, est mobile sur un angle de 270°, définissant ainsi au moins sept positions angulaires de la molette de commande 5 correspondant à sept modes possibles de la distribution de la ventilation.

L'enfoncement de l'organe de commande 7 permet ainsi à l'utilisateur la mise en marche ou l'arrêt de l'air conditionné dans le véhicule.

Le tambour 11 peut être fixé de manière amovible à la molette 19, par exemple par des moyens d'encliquetage 46b et de guidage 46a, de manière que la molette 19 et le tambour 11 soient solidaires en rotation.

En outre, la molette 5 et l'organe de commande 7 comportent des moyens de fixation amovibles, coopérant avec des moyens de fixation correspondants du socle 3.

Dans l'exemple illustré par les figures 1a à 1d, la bague de préhension 19 comporte une couronne 48a coopérant avec des bras d'encliquetage 48b correspondants portés par le socle 3.

En outre, l'organe de commande 7 comporte des rainures 48c coopérant avec des nervures correspondantes portées par le socle 3 (non visibles).

Par ailleurs, la molette de commande 5 est fixée de façon amovible à l'organe de commande 7. Dans l'exemple représenté par la figure 1a, l'organe de commande 7 comporte des crochets élastiques 49a coopérant avec un épaulement correspondant 49b de la bague de préhension 19.

Le tambour de commande est réalisé en un matériau transmettant de la lumière, par exemple transparent ou translucide, et le socle 3 comporte au moins un moyen d'éclairage, tel qu'une lampe 56 ou une diode électroluminescente 57, pour le rétroéclairage d'une surface d'affichage 58a, 58b du dispositif de commande 1 et pour la génération d'une lumière diffuse circulaire 58c autour de l'organe de commande 7 (figures 1b, 2b et 3b).

Pour générer une lumière diffuse circulaire 58c autour de l'organe de commande 7, la jupe périphérique 17 du tambour de commande 11 s'étend jusqu'à l'extrémité du dispositif de commande 1 et débouche du dispositif de commande 1 par un anneau entourant l'organe de commande 7. Le tambour de commande 11 permet ainsi de transmettre de la lumière depuis le moyen d'éclairage 56 jusqu'à l'anneau débouchant visible par les utilisateurs, permettant un meilleur repérage, notamment en conduite de nuit.

La surface d'affichage 58a, 58b comporte par exemple un film opaque à l'exception de portions laissant passer la lumière ayant la forme d'un symbole et/ou d'un signe. Le symbole est par exemple un pictogramme ou une écriture sous forme d'une inscription de lettre(s) ou de chiffre(s) en rapport avec la fonction à commander.

Par exemple et comme visible sur les figures 1b et 1d, l'organe de commande 7 comporte deux surfaces d'affichages 58a, 58b et le socle 3 possède deux moyens d'éclairage 56 et 57, pour le rétroéclairage respectif des surfaces d'affichage 58a, 58c et 58b.

On distingue ainsi une première surface d'affichage 58a sur les figures 1b et 1d, comportant des pictogrammes représentant différents modes de distribution de la ventilation rétroéclairés par une lampe correspondante 56 portée par le socle 3 et une deuxième surface d'affichage 58b formant un témoin lumineux, rétroéclairé par une diode électroluminescente correspondante 57 et représentant la mise en marche de l'air conditionné.

La surface d'affichage 58a, 58b est portée par l'organe de commande 7 et est rétroéclairée en fonction de la commande sélectionnée par la molette 5 et/ou par l'organe de commande 7.

Ainsi, par exemple la première surface d'affichage 58a est rétroéclairée en fonction de la commande de distribution sélectionnée par la molette de commande 5 et la deuxième surface d'affichage 58b est rétroéclairée en fonction de la commande de mise en marche ou arrêt de l'organe de commande 7.

Cet agencement permet de solidariser en rotation la bague de préhension 19 avec l'unité de base 12, tout en laissant de l'espace à l'intérieur de la molette 5, pour le passage des fils électriques ou des moyens d'actionnement de l'organe de commande 7.

Ainsi, il est possible de fixer les éléments électriques et/ou électroniques et les moyens d'actionnement de l'organe de commande 7 sur le socle 3.

Cet agencement est possible car la molette 5 est montée rotative sur moins de 360°, le pontet de liaison 18 n'autorisant pas un angle de rotation plus élevé.

On va maintenant décrire un autre exemple d'un dispositif de commande 1 selon ce premier mode de réalisation. Ce dispositif 1 représenté sur les figures 2a à 2d, permet la commande de la température de la ventilation.

Le dispositif 1 comporte les mêmes éléments que le dispositif de commande 1 de la distribution de la ventilation. Seuls les pictogrammes représentés sur les surfaces d'affichage 58a, 58b présentent des formes différentes.

Dans ce nouvel exemple, l'enfoncement de l'organe de commande 7 permet à l'utilisateur la mise en marche ou l'arrêt de la commande du dégivrage de la vitre arrière du véhicule et la molette de commande 5 permet la commande de l'intensité de la température de la ventilation.

Les pictogrammes de la première surface d'affichage 58a forment une série de segments inscrits en arc de cercle présentant deux couleurs différentes rétroéclairés correspondants aux symboles chaud et froid de la température de la ventilation.

Une deuxième surface d'affichage 58b présente un témoin lumineux, rétroéclairé pour représenter la mise en route de la commande du dégivrage.

On comprend ainsi que le dispositif de commande 1 du mode de ventilation (figures la à 1d) peut facilement être adapté en un dispositif de commande 1 de la température (figures 2a, 2b, 2c et 2d).

Les dispositifs de commande 1 possèdent donc des molettes de commande 5 définissant une même plage de variation angulaire et un organe de commande 7 définissant un même nombre d'état de commutation. Seul le bouton 30 de l'organe de commande 7 doit être modifié pour être représentatif de la commande spécifiée.

On va maintenant décrire plus en détails, le dispositif de commande 2 des figures 3a à 4, réalisé selon un deuxième mode de réalisation.

L'organe de commande 7 du deuxième dispositif de commande 2 comporte un commutateur électrique rotatif comportant un bouton 30 monté et commandé par un arbre rotatif 21 du socle 3.

Le commutateur permet ainsi d'actionner des commutateurs de puissance prévus à cet effet dans le socle 3 (non visibles) par exemple pour la commande de l'intensité de la ventilation.

L'arbre rotatif 21 définit par exemple cinq niveaux différents d'intensité de la ventilation.

La deuxième portion 40 du tube axial 16 est configurée pour permettre le passage de l'arbre rotatif 21 et forme un guide axial de l'arbre 21.

La molette de commande 5 du deuxième dispositif de commande 2 comporte en outre un adaptateur 62 monté à rotation sur l'arbre rotatif 21 entre le socle 3 et le tambour 11.

L'adaptateur 62 est configuré pour transmettre le mouvement de rotation du tambour 11 à l'unité de base 12 de manière que l'adaptateur 62 soit solidaire en rotation du molette de commande 5.

Pour cela, l'adaptateur 62 est raccordé au pontet de liaison 18 de la molette 5.

L'adaptateur 62 comporte en outre un guide dérivé 64 s'insérant dans une lumière 66 du socle 3 de manière à permettre le pivotement de l'adaptateur 62 par un mouvement pivotant du guide dérivé 64 dans la lumière 66.

Le guide dérivé 64 est destiné à être fixé à l'élément rotatif 13 de l'unité de base 12, de manière que l'élément rotatif 13 soit solidaire en rotation de la molette de commande 5 et qu'une extrémité du câble 15 de l'unité de base 12 soit mobile avec le guide dérivé 64.

Dans cette configuration, l'unité de base 12 ne présente pas d'arbre 20 comme pour le premier dispositif de commande 1.

Le guide dérivé 64 peut ainsi pivoter sur angle de 90°, définissant deux positions angulaires extrêmes de la molette de commande 5 correspondant dans cet exemple, à deux modes possibles de circulation de l'air dans le véhicule.

L'adaptateur 62 permet ainsi la dérivation de l'actionnement de l'unité de base 12 reliée à la molette de commande 5, de manière à permettre le passage de l'arbre rotatif 21 de l'organe de commande 7 sans avoir à modifier la molette de commande 5 du premier et du deuxième dispositif de commande 1, 2.

L'organe de commande 7 comporte en outre un support 68 fixé au socle 3, monté de façon concentrique dans la molette de commande 5 et présentant une surface d'affichage 58a, 58b rétroéclairable.

Le support 68 comporte des moyens de fixation amovibles coopérant avec des moyens de fixation amovibles correspondants du socle 3 (non visibles). Par exemple, le support 68 comporte des rainures 70a coopérant avec des nervures correspondantes portées par le socle 3 (non visibles).

Le support 68 comporte en outre un orifice permettant le passage du pontet de liaison 18 sur la plage angulaire de rotation de la molette 5.

On distingue ainsi une première surface d'affichage 58a du support 68 sur les figures 3a et 3b, comportant des pictogrammes et des chiffres représentant l'intensité de la ventilation et une deuxième surface d'affichage 58b comportant des pictogrammes représentant le mode de circulation de l'air.

La surface d'affichage 58a, 58b est rétroéclairée en fonction de la commande sélectionnée par la molette 5 et l'organe de commande 5, 7.

On comprend ainsi que le dispositif de commande 1 présentant un organe de commande à enfoncement (figures 1a à 2d) pour la commande de commutateurs de puissance peut facilement être adapté en un dispositif de commande 2 à bouton rotatif (figures 3a à 4).

Les dispositifs de commande 1, 2 possèdent ainsi un encombrement similaire leur permettant d'être facilement interchangeables dans un tableau de commande dans lequel ils n'ont plus de position prédéterminée.

Ainsi, le tableau de commande présente une structure modulaire qui comprend des dispositifs de commande ayant peu de pièces et pouvant être facilement adaptables en fonction du véhicule auquel le tableau de commande est destiné.

Cette conception modulaire permet, à partir d'un petit nombre de dispositifs de commande de base, de réaliser un grand nombre de tableaux de commande de types différents.

## Revendications

1. Dispositif de commande pour la commande de fonctions d'un tableau de commande pour véhicule automobile, comportant un socle (3), une molette de commande (5) montée en rotation sur le socle (3) et pouvant coopérer avec une unité de base (12) destinée à être connectée à un appareil du véhicule automobile devant être commandé, et un organe de commande (7) monté de façon concentrique dans ladite molette (5), ladite molette (5) comprend une bague de préhension (19) et un tambour de commande (11) présentant d'une part, une jupe périphérique (17) coopérant avec ladite bague (19), **caractérisé en ce que** le tambour de commande (11) présente d'autre part, un tube axial (16) relié à ladite jupe (17) par un pontet de liaison (18) et **en ce que** ledit tube axial (16) présente une première portion (36) formant un moyen de guidage en rotation de ladite molette (5) en s'insérant dans une collerette (38) correspondante du socle (3).

2. Dispositif de commande selon la revendication 1, **caractérisé en ce que** le tambour de commande (11) est réalisé en un matériau transmettant de la lumière et **en ce que** le socle (3) comporte au moins un moyen d'éclairage (56, 57), tel qu'une diode électroluminescente, pour le rétroéclairage d'une surface d'affichage (58a, 58b) du dispositif de commande (1, 2) et pour la génération d'une lumière diffuse circulaire (58c) autour de l'organe de commande (7).

3. Dispositif de commande selon la revendication 2, **caractérisé en ce qu'**une surface d'affichage (58a, 58b) est portée par l'organe de commande (7) et est rétroéclairée en fonction de la commande sélectionnée par la molette de commande (5) et/ou par l'organe de commande (7).

4. Dispositif de commande selon l'une quelconque des revendications précédentes, **caractérisé en ce que** l'organe de commande (7) comporte un commutateur électrique à enfoncement.

5. Dispositif de commande selon l'une quelconque des revendications 1 à 3, **caractérisé en ce que** l'organe de commande (7) comporte un commutateur électrique rotatif.

6. Dispositif de commande selon la revendication 5, **caractérisé en ce que** la molette de commande (5) comporte en outre un adaptateur (62) monté à rotation sur un arbre rotatif (21) du socle (3), entre le socle (3) et le tambour (11), configuré pour transmettre le mouvement de rotation du tambour (11) à l'unité de base (12).

7. Dispositif de commande selon la revendication 6, **caractérisé en ce que** l'adaptateur (62) comporte un guide dérivé (64) s'insérant dans une lumière (66) du socle (3) de manière à permettre le pivotement de l'adaptateur (62) par un mouvement pivotant du guide dérivé (64) dans la lumière (66).

8. Dispositif de commande selon l'une quelconque des revendications 5 à 7, **caractérisé en ce que** l'organe de commande (7) comporte un support (68) fixé au socle (3), monté de façon concentrique dans ladite molette (5) et présentant une surface d'affichage rétroéclairable (58a, 58b).

9. Dispositif de commande selon l'une des revendications précédentes, **caractérisé en ce que** le tube axial (16) présente une deuxième portion (40) formée par un rétrécissement de la première portion (36), configurée soit pour être solidaire en rotation d'un arbre (20) de l'unité de base (12), soit pour permettre le passage d'un arbre rotatif (21) du socle (3).

10. Dispositif de commande selon l'une quelconque des revendications précédentes, **caractérisé en ce que** la molette de commande (5) et l'organe de commande (7) comportent des moyens de fixation amovibles coopérant avec des moyens de fixation amovibles correspondants du socle (3).

11. Tableau de commande pour véhicule automobile **caractérisé en ce qu'**il comporte au moins un dispositif de commande (1, 2) selon l'une quelconque des revendications précédentes.

12. Tableau de commande pour véhicule automobile destiné à la commande de l'air conditionné **caractérisé en ce qu'**il comporte deux premiers dispositifs de commande (1) selon l'une quelconque des revendications 1 à 4 et 9 ou 10, pour la commande respective de la fonction de la température de la ventilation et de la distribution des flux d'air à l'intérieur de l'habitacle et au moins un deuxième dispositif de commande (2) selon l'une quelconque des revendications 5 à 8, pour la commande de l'intensité de la ventilation et du mode de recyclage de l'air.

## Claims

1. Control device for controlling functions on a motor vehicle control panel, comprising a base (3), a control knob (5) mounted so as to rotate on the base (3) and being capable of interacting with a base unit (12) designed to be connected to an apparatus of the motor vehicle that must be controlled, and a control member (7) mounted concentrically in said knob (5), said knob (5) comprising a gripping ring (19) and a control barrel (11) having, on the one hand, a peripheral skirt (17) interacting with said ring (19) **characterized in that** the control barrel (11) has, on the other hand, an axial tube (16) connected to said skirt (17) by a connecting bridge (18) and **in that** said axial tube (16) has a first portion (36) forming a means for guiding said knob (5) in rotation by being inserted into a matching collar (38) of the base (3).

2. Control device according to Claim 1, **characterized in that** the control barrel (11) is made of a material that transmits light and **in that** the base (3) comprises at least one lighting means (56, 57), such as a light-emitting diode, for the backlighting of a display surface (58a, 58b) of the control device (1, 2) and for the generation of a circular diffuse light (58c) around the control member (7).

3. Control device according to Claim 2, **characterized in that** a display surface (58a, 58b) is supported by the control member (7) and is backlit depending on the control selected by the control knob (5) and/or by the control member (7).

4. Control device according to any one of the preceding claims, **characterized in that** the control member (7) comprises an electric push switch.

5. Control device according to any one of Claims 1 to 3, **characterized in that** the control member (7) comprises an electric rotary switch.

6. Control device according to Claim 5, **characterized in that** the control knob (5) also comprises an adaptor (62) mounted so as to rotate on a rotary shaft (21) of the base (3), between the base (3) and the barrel (11), configured to transmit the rotary movement of the barrel (11) to the base unit (12).

7. Control device according to Claim 6, **characterized in that** the adaptor (62) comprises a diverted guide (64) that is inserted into an opening (66) of the base (3) so as to allow the adaptor (62) to pivot by a pivoting movement of the diverted guide (64) in the opening (66).

8. Control device according to any one of Claims 5 to 7, **characterized in that** the control member (7) comprises a support (68) attached to the base (3), mounted concentrically in said knob (5) and having a display surface (58a, 58b) that can be backlit.

9. Control device according to one of the preceding claims, **characterized in that** the axial tube (16) has a second portion (40) formed by a narrowing of the first portion (36), configured either to be secured in rotation with a shaft (20) of the base unit (12), or to allow a rotary shaft (21) of the base (3) to pass through.

10. Control device according to any one of the preceding claims, **characterized in that** the control knob (5) and the control member (7) comprise removable attachment means interacting with matching removable attachment means of the base (3).

11. Control panel for a motor vehicle, **characterized in that** it comprises at least one control device (1, 2) according to any one of the preceding claims.

12. Control panel for a motor vehicle designed for the control of air conditioning, **characterized in that** it comprises two first control devices (1) according to any one of Claims 1 to 4 and or 10, for the respective control of the ventilation temperature function and of the distribution of the airflows inside the car interior and at least one second control device (2) according to any one of Claims 5 to 8, for controlling the intensity of the ventilation and of the air recycling mode.

## Patentansprüche

1. Steuervorrichtung zur Steuerung von Funktionen einer Schalttafel für ein Kraftfahrzeug, die einen Sockel (3), ein Steuer-Rändelrad (5), das drehbar auf den Sockel (3) montiert ist und mit einer Basiseinheit (12) zusammenwirken kann, die dazu bestimmt ist, mit einem Gerät des Kraftfahrzeugs verbunden zu werden, das gesteuert werden soll, und ein Steuerorgan (7) aufweist, das konzentrisch in das Rändelrad (5) montiert ist, wobei das Rändelrad (5) einen Greifring (19) und eine Steuerwalze (11) enthält, die einerseits eine mit dem Ring (19) zusammenwirkende Umfangsschürze (17) aufweist, **dadurch gekennzeichnet, dass** die Steuerwalze (11) andererseits ein axiales Rohr (16) aufweist, das mit der Schürze (17) über einen Verbindungssteg (18) verbunden ist, und dass das axiale Rohr (16) einen ersten Teil (36) aufweist, der eine Drehführungseinrichtung des Rändelrads (5) formt, indem er sich in einen entsprechenden Kragen (38) des Sockels (3) einfügt.

2. Steuervorrichtung nach Anspruch 1, **dadurch gekennzeichnet, dass** die Steuerwalze (11) aus einem Licht übertragenden Material hergestellt ist, und dass der Sockel (3) mindestens eine Beleuchtungseinrichtung (56, 57) wie eine Elektrolumineszenzdiode für die Hintergrundbeleuchtung einer Anzeigefläche (58a, 58b) der Steuervorrichtung (1, 2) und zur Erzeugung eines kreisförmigen Streulichts (58c) um das Steuerorgan (7) herum aufweist.

3. Steuervorrichtung nach Anspruch 2, **dadurch gekennzeichnet, dass** eine Anzeigefläche (58a, 58b) vom Steuerorgan (7) getragen und abhängig von der von dem Steuer-Rändelrad (5) und/oder dem Steuerorgan (7) gewählten Steuerung hintergrundbeleuchtet wird.

4. Steuervorrichtung nach einem der vorhergehenden Ansprüche, **dadurch gekennzeichnet, dass** das Steuerorgan (7) einen elektrischen Druckschalter aufweist.

5. Steuervorrichtung nach einem der Ansprüche 1 bis 3, **dadurch gekennzeichnet, dass** das Steuerorgan (7) einen elektrischen Drehschalter aufweist.

6. Steuervorrichtung nach Anspruch 5, **dadurch gekennzeichnet, dass** das Steuer-Rändelrad (5) außerdem einen Adapter (62) aufweist, der drehbar auf eine Drehwelle (21) des Sockels (3) zwischen dem Sockel (3) und der Trommel (11) montiert und konfiguriert ist, um die Drehbewegung der Trommel (11) an die Basiseinheit (12) zu übertragen.

7. Steuervorrichtung nach Anspruch 6, **dadurch gekennzeichnet, dass** der Adapter (62) eine abgezweigte Führung (64) aufweist, die sich in ein Langloch (66) des Sockels (3) einfügt, um das Schwenken des Adapters (62) durch eine Schwenkbewegung der abgezweigten Führung (64) in dem Langloch (66) zu erlauben.

8. Steuervorrichtung nach einem der Ansprüche 5 bis 7, **dadurch gekennzeichnet, dass** das Steuerorgan (7) einen am Sockel (3) befestigten Träger (68) aufweist, der konzentrisch in das Rändelrad (5) montiert ist und eine hintergrundbeleuchtbare Anzeigefläche (58a, 58b) aufweist.

9. Steuervorrichtung nach einem der vorhergehenden Absprüche, **dadurch gekennzeichnet, dass** das axiale Rohr (16) einen zweiten Teil (40) aufweist, der durch eine Verengung des ersten Teils (36) geformt wird, der entweder konfiguriert ist, um in Drehung fest mit einer Welle (20) der Basiseinheit (12) verbunden zu sein, oder um den Durchgang einer Drehwelle (21) des Sockels (3) zu erlauben.

10. Steuervorrichtung nach einem der vorhergehenden Ansprüche, **dadurch gekennzeichnet, dass** das Steuer-Rändelrad (5) und das Steuerorgan (7) lösbare Befestigungseinrichtungen aufweisen, die mit entsprechenden lösbaren Befestigungseinrichtungen des Sockels (3) zusammenwirken.

11. Schalttafel für ein Kraftfahrzeug, **dadurch gekennzeichnet, dass** sie mindestens eine Steuervorrichtung (1, 2) nach einem der vorhergehenden Ansprüche aufweist.

12. Schalttafel für ein Kraftfahrzeug, die zur Steuerung der Klimaanlage bestimmt ist, **dadurch gekennzeichnet, dass** sie zwei erste Steuervorrichtungen (1) nach einem der Ansprüche 1 bis 4 und 9 oder 10 zur jeweiligen Steuerung der Funktion der Temperatur der Lüftung und der Verteilung der Luftströme im Inneren des Fahrzeuginnenraums und mindestens eine zweite Steuervorrichtung (2) nach einem der Ansprüche 5 bis 8 zur Steuerung der Stärke der Lüftung und des Luftumwälzmodus aufweist.
